Europäisches Patentamt

European Patent Office

Office européen des brevets

(11) Publication number: **0 164 474**
**A2**

(12) **EUROPEAN PATENT APPLICATION**

(21) Application number: **84309092.9**

(22) Date of filing: **27.12.84**

(51) Int. Cl.⁴: **F 16 D 3/60**

(30) Priority: **08.06.84 GB 8414715**

(43) Date of publication of application:
**18.12.85 Bulletin 85/51**

(84) Designated Contracting States:
**BE DE FR GB IT NL SE**

(71) Applicant: **Flexibox Limited**
**Nash Road Trafford Park**
**Manchester M17 1SS(GB)**

(72) Inventor: **Taylor, Ivan**
**26, Cornhill Road**
**Davyhulme Manchester(GB)**

(74) Representative: **Lunt, George Francis Mark**
**Burmah Oil Trading Ltd. Castrol Research Laboratories**
**Whitchurch Hill Pangbourne**
**Reading Berkshire RG8 7QR(GB)**

(54) **Adjustable torsionally free couplings.**

(57) A torsionally soft coupling (10) is rendered adjustable in any of four physical parameters, namely radius (Rx,Ry) of attachment of links (4,5), total lengths (Lx + Ly) of links, ratio of link lengths (Lx'Ly) and mass (m) acting at the pivot point. The possibility of such adjustment renders the coupling tunable after installation to cater for unforeseen differences from predicted values in the torque, speed and vibration characteristics of the drive train into which it is assembled.

FIG. 10

EP 0 164 474 A2

## Adjustable Torsionally Free Couplings

This invention relates to torsionally free couplings designed to transmit a torque at a given speed from one rotating shaft to another but not to transmit fluctuations of that torque should they occur. The invention relates particularly to a coupling of the type comprising input and output members which are connectible respectively to driving and driven shafts and which are connected together by coupling elements flexible in the plane of rotation by torque transmitted through the coupling and by centrifugal force acting on the coupling elements such that, over a range of speeds of rotation of the coupling and torque transmitted by the coupling, the input and output members are relatively rotatable with respect to one another.

Of course, when such a system is at rest the coupling is free and its stiffness S is zero, except for any bias which may be applied to the coupling elements. When a torque T is applied to the coupling the stiffness changes and depends also on the speed of rotation. It is more pertinent therefore, to consider the stiffness to torque or S/T ratio of the coupling at any given speed which should of course be as small as possible at the operating torques and speeds of the coupling if the coupling is to serve its function of reducing transmitted torque fluctuations.

The S/T ratio is dependent only on the speed of rotation and the torque transmitted in any given coupling. If these are known at the design stage then the coupling can be arranged to exhibit optimum characteristics in those conditions. However in practice either or both the torque and speed may not in fact turn out to be entirely as predicted and hence the coupling does not in these circumstances perform as well as it might.

Furthermore, power transmission systems, particularly those which suffer from torsional vibrations, can be extremely complex in terms of numbers of inertias, damping characteristics and shaft elasticity. Although sophisticated techniques are available for analysing frequencies and amptitudes and the positions of nodal points of torque fluctuations these are still only theoretical and rely heavily on information supplied by the designers of the transmission system.

Thus because a flexible coupling must be designed and supplied before the drive train into which it is to be incorporated is assembled, it is quite feasible that the coupling so supplied does not perform as adequately as it should under all operating conditions eg, at start up, fault condition or in normal operation.

It is therefore an object of this invention to provide a coupling of the type referred to which is tunable so that adjustment may be made to the coupling once it is installed in a particular drive train if that should be found necessary.

In accordance with the invention there is provided a coupling of the type referred to including means to adjust a physical parameter of the coupling to alter its operating characteristics.

A first said physical parameter is the radius of the point of attachment to one or both members of the coupling elements.

A second said physical parameter is the overall length of the coupling elements. A third is the point along the overall length of the coupling elements at which the centrifugal force on the coupling elements may be considered to act. Where the coupling elements each comprise two pivotally interconnected links pivoted at either free end to the input and out put members respectively said point is usually considered to be the point of interconnection between the two links. Hence said third physical parameter in this event is the relative lengths of the two links in each coupling element.

A fourth physical parameter is the mass of the coupling elements on which the centrifugal force may be considered to act. Where the coupling elements comprise two links as mentioned above this mass is the resultant mass acting at the pivot point between the two links.

Each of the above physical parameters has various effects and to varying degrees on the coupling, both in its structural limitations (for instance,the number and strength of the coupling elements capable of being fitted) and in its performance at the torques, speeds and vibration characteristics experienced.

Thus ideally a coupling incorporates means to adjust all four physical parameters so that the optimum performance can be obtained in a given drive train for the conditions experienced.

However if only one physical parameter is rendered adjustable this does at least provide a degree of tunability to the coupling as a whole.

A further advantage provided by the invention is that it is no longer necessary, in every case, to design a coupling to fit the particular application for which it is required. It is possible instead that a standard tunable coupling according to the invention will be able to cope with a number of different applications where hitherto specially designed couplings would normally be employed.

The invention is further described hereinafter with reference to the accompanying drawings in which:-

Fig.1 is a schematic diagram of a coupling of the type to which the present invention relates;

Figs,2,2a and 2b are details of links which may be employed in a coupling according to the present invention;

Fig.3 is a typical graph of Torque (solid lines) and S/T ratio (dashed lines) plotted against coupling deflection at constant speed and in which the radius of the attachment of the X link (Rx) is varied;

Fig.4 is a typical graph as in Fig.3 but in which the radius of the Y link (Ry) is varied;

Fig.5 is a typical graph as in Fig.3 but in which the ratio (Lx/Ly) of the lengths of the X and Y links is varied (overall length (Lx + Ly) constant);

Fig.6 is a typical graph as in Fig.3 but in which the overall lengths of the X and Y (Lx +Ly) links is varied (ratio Lx/Ly) constant);

Fig.7 is a typical graph as in Fig.3 but in which the mass (m) acting at the J pivotis varied;

Fig.8 is a typical graph of Torque (solid lines) and S/T ratio (dashed lines) plotted against deflection at varying speeds;

Fig.9 is a section through a J pivot adapted to alter the effective link length of either link; and,

Fig.10 is a schematic illustration of a coupling according to the invention.

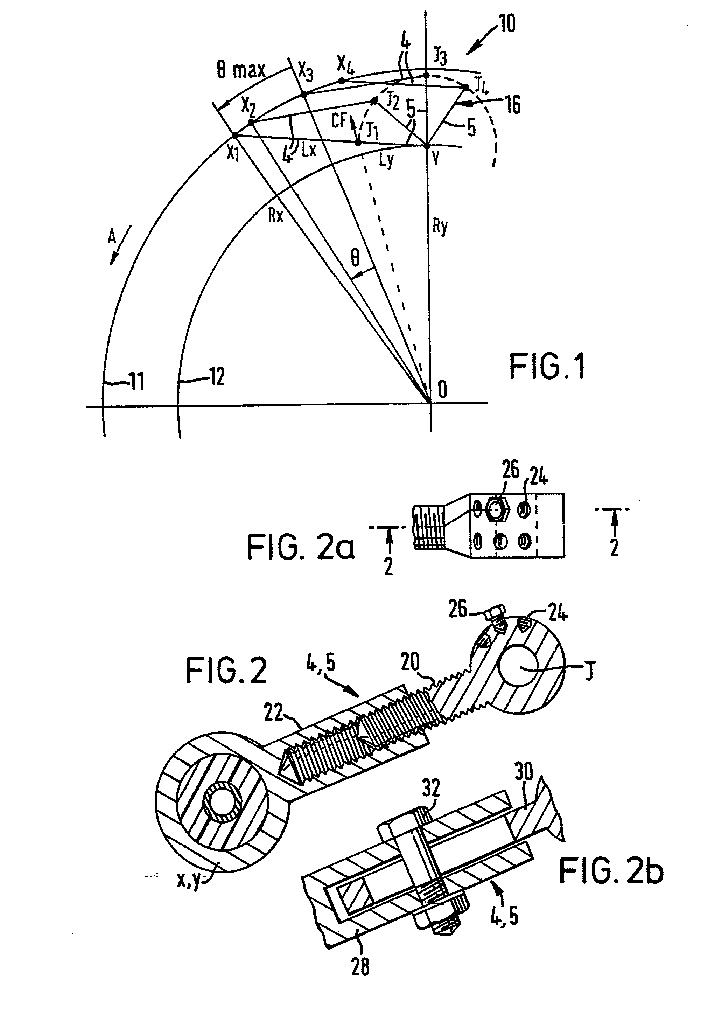

Referring to Fig.1 a coupling 10 of the type referred to comprises for example, an input member 11 and an output member 12 connected together at pivot points X,Y, by a plurality of coupling elements 16 (only one being shown). Each element 16 comprises in this instance two links 4, 5 which are pivotally interconnected at J. The links 4, 5 are commonly referred to as the X link and Y link respectively. The input and output members are connected to respective driving and driven shafts which are not shown in the drawings. As the driving shaft begins to rotate from rest, the links 4,5 if some load exists in the driven shaft, pivot and adopt an inline position $X_1,J_1,Y$. At this point the coupling 10 is effectively rigid. As the speed of rotation builds up however centrifugal force CF acting at the pivot point $J_1$ urges the links towards a new position $X_2,J_2,Y$ where the torquetransmitted by the coupling and tending to straighten the links 4,5 balances the effect of the centrifugal force tending to bend the links 4,5.

If the load on the driven shaft is removed at some speed and hence the torque reduced to zero, the centrifugal force willfurther urge the links 4,5 towards the position $X_3,J_3,Y$ although inertia may carry the links beyond this to position $X_4,J_4,Y$. At this point however, if the mass, m of the links is considered to act at pivot point J, the centrifugal force will now pivot the links 4,5 in the other direction to return them to the position $X_3,J_3,Y$ where, it will be noted, link 5 is radial.

For convenience the position $X_3$, where the link 5 is radial and no torque is transmitted, is taken as the zero angular deflection position. As load is applied to the driven shaft and torque is applied through the coupling the links 4,5 move back to position $X_2, J_2, Y$ where the angular deflection is given by $\theta$. $\theta_{max}$ is the maximum deflection possible where the links 4,5 are in line.

Thus at any given speed, between angular deflections $\theta_{zero}$ to $\theta_{max}$ the torque T applied through the couplings increases from zero to the maximum permissable. Also the stiffness S of the coupling changes between $\theta_{max}$ and $\theta_{zero}$. However to measure the usefulness of the coupling it is more relevant to consider the S/T ratio.

At a deflection of $\theta_{max}$ the stiffness S is infinite and hence the S/T ratio is high. At $\theta_{zero}$, although the stiffness is usually low, zero torque is being transmitted and hence the S/T ratio remains high. At intermediate deflections the S/T ratio is less and depends on the physical parameters of the coupling.

It has generally been found however that if the S/T ratio is low, for instance less than about 10, then torque fluctuations above and below the mean torque will not be transmitted by the coupling. If the S/T ratio is higher than about 50 then most fluctuations will be transmitted. Between values of 10 and 50 a proportion only of the fluctuations will be transmitted.

The nature of the coupling is such that at any given speed of rotation there is a torque at which the S/T ratio is a minimum. If a graph is drawn of torque versus speed it is found that the line of minimum S/T ratio follows the power cube law. Thus as long as the transmission system follows this law it is a simple matter to arrange for the minimum S/T ratio line to coincide with the torque/speed line for the system. Such a system is found in marine applications for instance where the torque applied to a ship's propeller is found to increase with the square of the speed.

However there are many applications where this is not the case and the torque/speed line for a system may not follow the power cube law. In such instances the torque/speed line may only coincide with the minimum S/T ratio line at a single point or even not at all.

Furthermore that point may not coincide with a point on the torque/speed line where fluctuations are found to be at their worst, even though theoretical predictions may have led the designer of the coupling to achieve fairly close coincidence between them. By rendering the coupling adjustable it is possible to tune it once it is installed in a drive train to optimise its performance.

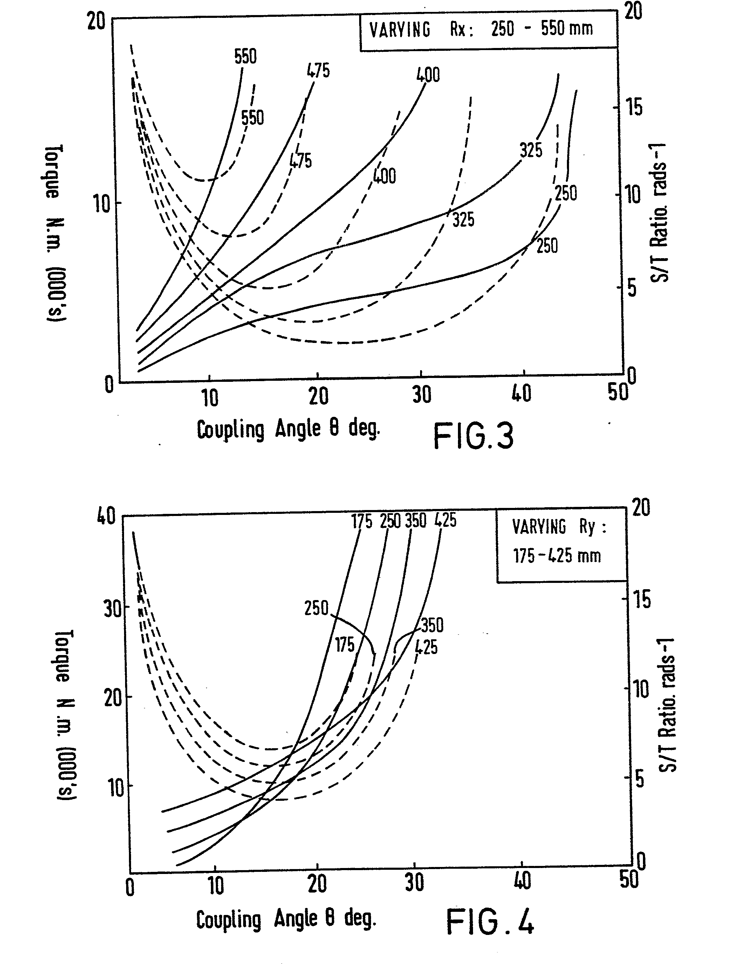

The effects of adjustment of four physical parameters is shown in Figs.3 to 7. For convenience a standard coupling is established in which, with reference to Fig.1, the four physical parameters have the following values.

1. a) The radius Rx of the point of attachment to the input member 11 of the driving link 4:

$$Rx = 400mm$$

   b) The radius Ry of the point of attachment to the output member 12 of the driven link 5:

$$Ry = 300mm$$

2. The overall length (Lx + Ly) of the links 4,5:

$$(Lx + Ly) = 330mm$$

3. The ratio of the lengths of the links 4,5 which determines the position of the pivot point J at which centrifugal force is considered to act on the coupling:

$$(Lx/Ly) = 1.6$$

4. Mass m acting at the point J:

$$m = 9.0Kg$$

The speed of the coupling is standardised at 1000 revolutions per minute. In each graph, which results from determinations at constant speed, the torque T transmitted by the coupling is plotted in solid lines against the angular deflection $\theta$ of the coupling. The slope of this curve determines the stiffness S of the coupling and so the S/T ratio at any given angular deflection can also be determined and these are plotted in dashed lines in each graph.

In Fig.3 the parameters referred to above are kept constant except for the radius of attachment of the X link which is varied between 250 and 550mm. The maximum deflection $\theta_{max}$ decreases as the radius Rx is changed in either direction from about 250mm. As the radius Rx is increased from 250mm the minimum S/T ratio increases. However, at higher torques, with increasing radius Rx one finds that the S/T ratio decreases such that with greater radius Rx the coupling has greater torque transmission capability while still maintaining a reasonably small S/T ratio.

In Fig. 4 the radius Rx, varied in Fig. 3, is kept constant at 400mm but the radius Ry of attachment of the Y link is varied between 175 and 425mm. This has a similar but not so marked effect on the torque and S/T ratio curves. As Ry is increased to 425mm the maximum deflection $\theta_{max}$ increases although if Ry increased further $\theta_{max}$ would stop increasing and begin to decrease. Unlike Rx however, the value of the minimum S/T ratio is decreased with increasing Ry although the angular deflection at which it occurs is not changed significantly.

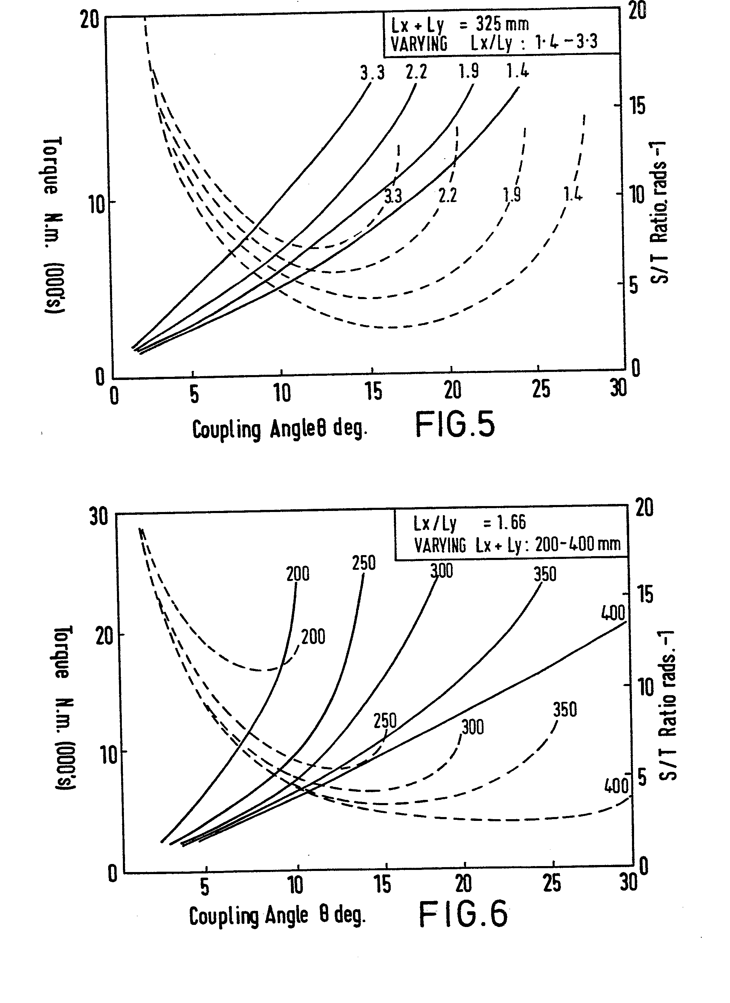

In Fig. 5, Rx and Ry are maintained at 400 and 300mm respectively. The combined length of the links X and Y is also maintained at a standard value of 325mm. However the ratio of the length of the X link to that of the Y link (Lx/Ly) is varied between 1.4 and 3.3. This has the effect of moving the position of the J pivot.

As can be seen this has a similar effect to varying Rx.
By increasing the Lx/Ly ratio the maximum possible
angle of deflection is reduced and the minimum S/T
ratio attainable is increased. However, the torque at
which that minimum occurs is not altered significantly.
The maximum torque capacity decreases with increasing
Lx/Ly ratio but, as opposed to the changes brought
about by altering Rx, the range of torques within a
maximum limit of S/T ratio is affected by changing the
Lx/Ly ratio.

In Fig. 6, and conversely with respect to Fig. 5, the
Lx/Ly ratio is maintained constant at 1.66 while the
overall link length (Lx + Ly) is varied between 200 and
400 m.

With increasing link length the maximum deflection is
of course increasing and so also is the softness of the
coupling, that is, the minimum S/T ratio is decreasing
The effects of increasing link length are very similar
to the effects described above in relation to Fig 3 and
decreasing radius Rx of attachment of the x link.

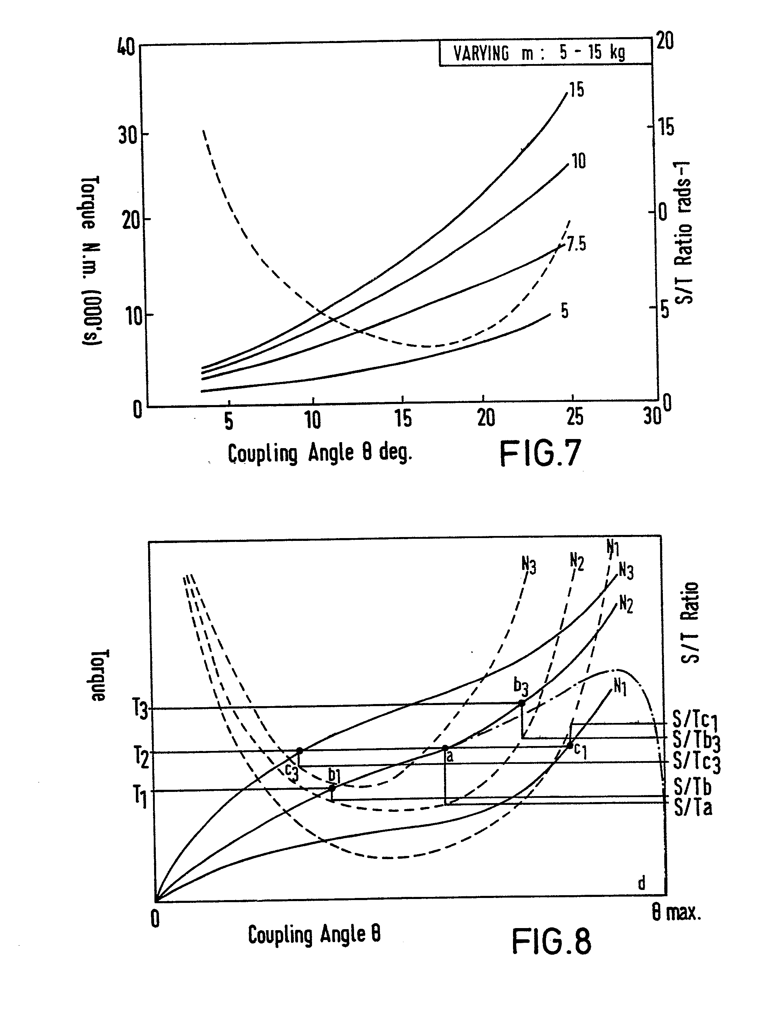

Finally in Fig. 7 in which Lx,Ly,Rx and Ry are retained
at the standard mentioned above the mass m acting at
the pivot J is varied between 5 and 15Kg. The variation
in this mass has no effect on the position of the S/T
curve. This is determined entirely by the dimensions
and positions of the links 4,5. Moreover the shape of
the torque curve is not changed significantly and this
is again essentially determined by these geometric
parameters. However the position of the torque curve is altered. Thus the torque range and maximum capacity of the coupling increases with increasing m.

In Fig 8 the torque deflection curves are shown for a typical coupling operating at increasing speeds $N_1$, $N_2$ and $N_3$. The S/T ratio curves are also shown for these different speeds. As can be seen the effect of speed on the curves is similar to those of variation in link length (Lx + Ly), ratio Lx/Ly or radius Rx of the x link described with reference to Figs 3, 5 and 6.

Suppose the coupling whose characteristics are shown in Fig 8 is designed in respect of link lengths, positions and mass in such a way that, if it is operating at speed $N_2$ and torque $T_2$, it adopts the position $\underline{a}$ in the drawing and in which its S/T ratio is thus $S/T_a$. If however in operation it is found that the speed of rotation of the coupling is in fact different, either $N_1$ or $N_3$, then the coupling will adopt either position $\underline{C}_1$ or $\underline{C}_3$ respectively - assuming the torque remains the same. Extrapolating from these positions to the appropriate S/T curve the resulting S/T ratios, $S/T_{c1}$ and $S/T_{c3}$ respectively are both higher than $S/T_a$.

Similarly if the speed should be as predicted but the torque be in fact either $T_1$ or $T_3$ then the coupling will adopt either position $\underline{b}_1$ or $\underline{b}_3$ respectively and the resulting S/T ratios, $S/T_{b1}$ and $S/T_{b3}$, are again both higher than $S/T_a$.

The invention provides a coupling which is adjustable such that the engineer after installing a coupling and finding that conditions were not entirely as predicted can tune the coupling by adjusting one or more of the coupling's parameters so as to alter the torque-deflection-S/T ratio curves in order to adapt the coupling to the specific conditions and requirements actually experienced.

It should be appreciated, however, that such adjustment or tuning may not necessarily simply be with the purpose of reducing the S/T ratio to a minimum possible. In some instances a very low S/T ratio is not desirable, for example when some stabilisation of inertias on either side of the coupling is desired. In this case it may be desirable to stiffen a coupling from the original design stiffness then thought to be optimal.

Moreover, the system may be such that its vibrational characteristics, during normal running, during start-up and run-down and during faulty operation (for instance if a cylinder in a multi-cylinder internal combustion engine to which the coupling is attached is misfiring), dictate not just a particular minimum S/T ratio but a particular or best-suited torque-deflection curve. If in any of these conditions the vibration characteristics are not as predicted then again it may be desirable to adjust the coupling such that its characteristiccurves are adapted to best suit the vibration characteristics experienced.

14

Considering particuarly the situation during the start-up of a motor or engine and again referring to Fig. 8 the advantage of a tunable coupling can be appreciated. A coupling will normally extend to θmax prior to or immediately following start-up. Depending then on the relationship between torque and speed during start-up, it will follow a path across the T/θ graph which could for example, be defined by the chained line $\underline{d}$ to $\underline{a}$. During this period the stiffness of the coupling is clearly varying in a complex relationship with torque and speed. At the same time exciting frequencies can be varying, as for example in synchronous motors where torsional vibration frequencies equal twice the slip frequency (that is the difference between motor synchronous speed and rotational speed at the time being considered). The possibility for a system natural frequency to occur during start-up is clearly present and again a tunable coupling could be advantageous in eliminating it.

However it should be emphasised that in both the steady state and start-up situations discussed above that the presence of a system natural frequency coincident with an exciting frequency is not necessarily unacceptable because the non-linearity of the couplings stiffness characteristic precludes the onset of resonance.

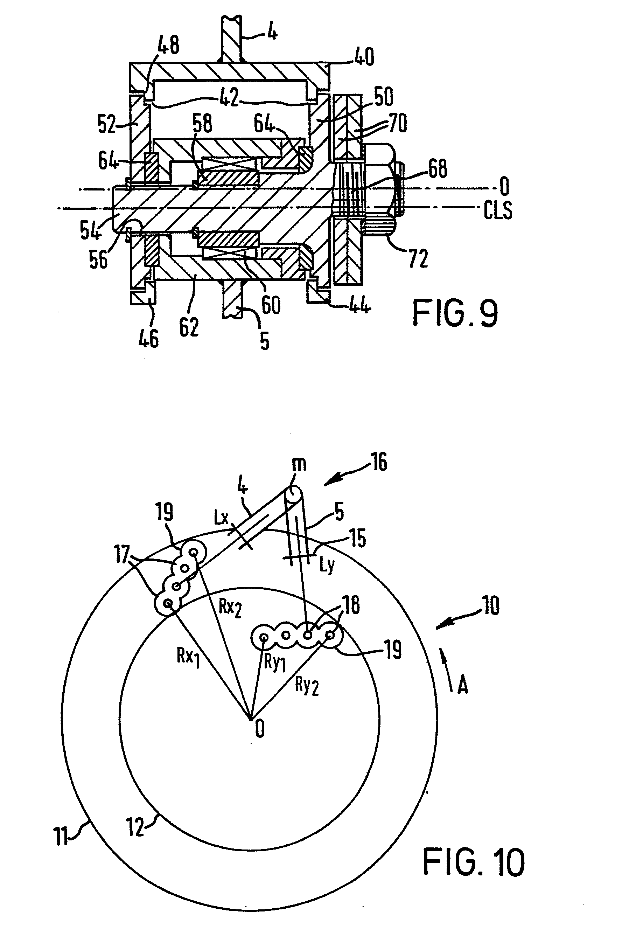

Fig. 10 illustrates schematically how adjustment of the geometric parameters of a coupling might be effected. Each link 4,5 is arranged telescopically such that the lengths Lx,Ly can be varied.  A pin 15 is employed to secure the links at their desired lengths.

Each link is secured to the input and output members 11,12 by bolts passing through holes 17,18 disposed in the members 11,12. A plurality of holes 17 and 18 can be provided at differing distances from centre O in order to change the radii Rx and Ry of attachment of the links 4,5 respectively to the members 11,12. Circular indentations 19 may be provided around each hole to locate positively the pivots X,Y connected to the members 11,12.

In Fig. 2 a link 4,5 is shown. This comprises two parts 20,22 which are screw threaded into one another. By turning part 20 with respect to part 22 the length of the link can be varied as desired. Moreover, in the region of the pivot point J the link is provided with a number of tapped holes 24 into which bolts 26 can be screwed for the purpose of increasing the mass m acting at the pivot J.

In Fig. 2b the link 4,5 comprises a forked part 28 and a slotted part 30 which is slidable in the forked part. A bolt 32 is adapted to clamp the two parts 28,30 together to fix the link at a desired length.

In Fig. 9 a cross-section through a J pivot is shown. The links 4,5 are shown in part, the link 4 terminating in a forked part 40 having a transverse circular bore 42 formed in the arms 44,46 of the fork. The bore or opening 42 is stepped at 48 to receive in each arm a correspondingly stepped pivot plate 50 and 52 respectively. The plate 50 has an eccentrically disposed hole 56 in the plate 52. A circlip 58 on the shaft 54 retains the plates 50,52 together and in the bores 42 of the arms 44,46.

The shaft 54 carries a bearing sleeve 58 which, via roller bearings 60, carries a pivot sleeve 62 to which the link 5 is connected. The link 5 can therefore pivot around the shaft 54. Gaskets 64 retain lubricant within the confines of the bearings 60.

The plate 50 also carries a threaded stud 68 to which weights 70, in the form of bored discs, can be secured by nut 72 to vary the weight of the J pivot.

It will be appreciated that if the plates, 50,52 are rotated about its axis O in the bores 42 the centreline (CLS) of the shaft 54 will also rotate about the axis O. This results in changing the effective length of the link 4.

Moreover, it should be appreciated that the same principle could be employed to change the effective radius of attachment of a link to a member by for instance fixing the forked part 40, not to a link 4 as shown, but to one or other member 11,12. Finally it will also be appreciated that once the optimum position of the shaft 54 in the forked part 46 is established it is necessary to prevent the plates 50,52 from further rotating in the bores 42. Any suitable arrangement such as keying could be employed for this purpose.

## CLAIMS

1. A flexible coupling (10) comprising input (11) and output (12) members which are connectible respectively to driving and driven shafts and which are connected together by coupling elements (16) flexible in the plane of rotation of the coupling by torque transmitted through the coupling and by centrifugal force acting on the coupling elements such that, over a range of speeds of rotation and torques transmitted by the coupling, the input and output members are relatively rotatable with respect to one another, characterised in that at least one physical parameter of the coupling is adjustable to vary the operating characteristics of the coupling.

2. A flexible coupling as claimed in claim 1 charaterised in that a first of said physical parameters is the radious ($Rx, Ry$) of the point of attachment to either one or both members of the coupling elements.

3. A flexible coupling as claimed in claim 1 or claim 2 characterised in that in which a second of said physical parameters is the overall length ($lx, Ly$) of each coupling element.

4. A flexible coupling as claimed in claim 1,2 or 3 characterised in that a third of said physical parameters is the point ($lx, Ly$) along the length of eachcoupling element at which the centre of gravity ($J$) of each coupling element is considered to act.

0164474

5. A flexible coupling as claimed in any preceding claim characterised in that each coupling element (16) comprises two pivotally interconnected links (4,5) pivoted at either free end to the input and output members.

6. A flexible coupling as claimed in claim 4 and in claim 5 characterised in that the centre of gravity is substantially at the point of interconnection (J) between the two links (4,5) and in which said third physical parameter is determined by the relative lengths (Lx,Ly) of the two links (4,5) in each coupling element.

7. A coupling as claimed in any preceding claim characterised in that a fourth of said physical parameters is the mass (m) of the coupling elements and upon which the centrifugal force acts.

8. A coupling as claimed in claim 2 characterised in that each member has a number of holes (17,18) disposed therein at varying radii from the centre of rotation of the coupling any of which is useable for the attachment to each member of each coupling element so as to render said first parameter variable.

9. A coupling as claimed in claim 5 characterised in that one or both links (4,5) comprise two interengaging parts (20,22,28,30) securable together at different lengths (Lx,Ly) to render said second and/or third physical parameters variable.

10. A coupling as claimed in claim 9 in which characterised in that one part (20) is screw threaded into the other part (22), such that the length (Lx,Ly) of the or both links (4,5) is determined by the amount that said one part (20) is screwed into said other part (22).

11. A coupling as claimed in claim 9 characterised in that one part (28) is forked to slidably receive between its forks the other part (30) which is slotted, securing means (32) being connected across the forks and through the slot in said other part to secure the two parts (28,30) together at some desired length.

12. A coupling as claimed in claim 7 and in claim 5 characterised in that one or both links in the region of the pivot (J) between them is bored (24) to receive weights in order to render said fourth parameter variable.

13. A coupling as claimed in claim 12 characterised in that said region is bored at a plurality of points each to receive a weight in the form of a bolt (26).

14. A coupling as claimed in claim 5 characterised in that the pivot (J) between the links (4,5) comprises a fork on one link (4) between the arms (44,46) of which extends a shaft (54) about which the other link (5) pivots, the position of the shaft in the arms (44,46) being variable in order to render said second and third parameters variable.

15. A coupling as claimed in claim 15 characterised in that said shaft is eccentrically positioned between two plates (50,52) carried one in each of circular bores (42) formed in the arms (44,46) of said one link (4), such that rotation of said plates varies said second and third parameters.

16. A coupling as claimed in claim 14 or 15 and in claim 7 characterised in that said shaft (54) has an extension beyond the arms (44) of said fork to which weights (70) may be added in order to vary said fourth physical parameter.

17. A coupling as claimed in claim 15 and 16 in which said extension (68) is concentric with said plates(50,52).

18. A coupling as claimed in claim 16 or 17 in which said weights are in the form of washers (70) and in which said extension (68) is threaded to receive a nut (72) to secure said washers to said one link (4).

FIG.1

FIG. 2a

FIG. 2

FIG. 2b

FIG.3

FIG.4

FIG.5

FIG.6

FIG.7

FIG.8

FIG. 9

FIG. 10